Europäisches Patentamt

European Patent Office

Office européen des brevets

(11) Numéro de publication : **0 357 471 B1**

(12) **FASCICULE DE BREVET EUROPEEN**

(45) Date de publication du fascicule du brevet :
**04.11.92 Bulletin 92/45**

(51) Int. Cl.⁵ : **H04L 12/00, H04L 25/24**

(21) Numéro de dépôt : **89401936.3**

(22) Date de dépôt : **06.07.89**

(54) **Circuit d'interface pour liaison série ou boucle de courant.**

(30) Priorité : **08.07.88 FR 8809292**

(43) Date de publication de la demande :
**07.03.90 Bulletin 90/10**

(45) Mention de la délivrance du brevet :
**04.11.92 Bulletin 92/45**

(84) Etats contractants désignés :
**AT BE DE ES GB IT SE**

(56) Documents cités :
**INSTRUMENTS & CONTROL SYSTEMS, vol. 53, no. 1, janvier 1980, pages 47-53, Radnor, Pennsylvanie, US; S. LEIBSON: "What areRS-232C and IEEE 488?"**
**MESURES, REGULATION ET AUTOMATISME, vol. 50, no. 12, 7 octobre 1985, pages 35-38, Paris, FR; J.-P. VERNAY: "L'avenir en RS -485 pour les équipements déportés"**

(56) Documents cités :
**MICROELECTRONICS & RELIABILITY, vol. 21, no. 3, 1981, pages 295-314, Pergamon Press Ltd, Oxford, GB; A.R. WOOD: "Standardinterfaces for serial data communication"**
**ELECTRONIC ENGINEERING, vol. 56, no. 694, octobre 1984, page 46, Londres, GB; B.S. WOLFENDEN: "RS232 (V24) - current loopinterface"**

(73) Titulaire : **TELEMECANIQUE**
**43-45, Boulevard Franklin Roosevelt**
**F-92500 Rueil Malmaison (FR)**

(72) Inventeur : **De Feraudy, Luc**
**88, Rue de la Grand Font**
**F-16000 ANGOULEME (FR)**
Inventeur : **Fournier, Jean-Michel**
**4, Allée Jules Vedrine**
**F-16000 ANGOULEME (FR)**

(74) Mandataire : **Marquer, Francis et al**
**Cabinet Moutard 35, Avenue Victor Hugo**
**F-78960 Voisins le Bretonneux (FR)**

## Description

La présente invention concerne un circuit d'interface pour appareil électrique connectable à une liaison série ou à une liaison à boucle de courant pour recevoir et/ou émettre un signal porteur d'informations via une telle liaison.

Certains appareils électroniques doivent pouvoir être raccordés, soit à une liaison série normalisée du type RS 232, RS 422, etc..., soit à une liaison à boucle de courant. Les appareils connus présentent à cet effet des circuits d'interface dont une partie est spécifique à une liaison série et dont une autre partie est spécifique à une boucle de courant. Mais du fait que les signaux reçus en mode série et en mode boucle de courant ne peuvent pas être interprétés de façon homogène par une logique ou un processeur inclus dans l'appareil, il est indispensable de reconfigurer le circuit d'interface à chaque fois que l'on désire le connecter à une liaison de type différent.

La présente invention a pour but d'éviter cet inconvénient à l'aide d'un circuit d'interface qui permet de rendre homogènes les signaux reçus d'une liaison série ou d'une boucle de courant afin de les traiter de la même manière.

Elle a également pour but de réaliser un tel interface à l'aide de moyens électroniques simples et adaptés à une large plage de vitesses de transmission.

Selon l'invention, le circuit d'interface comporte :
- un premier circuit de réception connectable à une liaison à boucle de courant,
- un deuxième circuit de réception connectable à une liaison série,
- les deux circuits de réception étant reliés à une entrée commune d'un organe d'exploitation du signal,
- un organe de détection et de traitement logique agencé pour délivrer à l'entrée commune de l'organe d'exploitation un signal de sortie homogène, par exemple identique, pour l'une et l'autre liaison, quel que soit l'état de connexion de l'appareil.

L'organe de détection et de traitement logique permet ainsi à l'organe d'exploitation - par exemple une logique ou un processeur - de traiter de manière identique le signal reçu d'une liaison série ou le signal reçu d'une boucle de courant.

Le circuit d'interface comprend, de préférence, un détecteur de déconnexion associé au premier circuit de réception et une logique - par exemple à porte OU exclusif - recevant un signal de déconnexion issu du détecteur et le signal de données issu du premier circuit.

Dans un mode de réalisation simple, le détecteur de déconnexion comprend un interrupteur associé à une capacité de manière que celle-ci soit chargée à travers une résistance dans l'état déconnecté de l'appareil, la constante de temps étant déterminée pour que le signal de déconnexion reste à son niveau représentatif de connexion dans une large gamme de vitesses de transmission.

L'invention sera mieux comprise à la lecture de la description d'un exemple non limitatif qui va être faite à présent en regard des dessins annexés.

La figure 1 est le schéma synoptique d'un circuit d'interface conforme à l'invention ;

La figure 2 montre plus en détail un mode de réalisation de la partie réception du circuit de la figure 1 ;

La figure 3 représente plus en détail une partie dédiée à la réception en boucle de courant du circuit de la figure 2 ;

Les figures 4 et 5 montrent des signaux transmis respectivement sur une liaison série et dans une boucle de courant ;

La figure 6 est un tableau des valeurs logiques de différents signaux ;

La figure 7 est un diagramme de signaux dans le circuit d'interface.

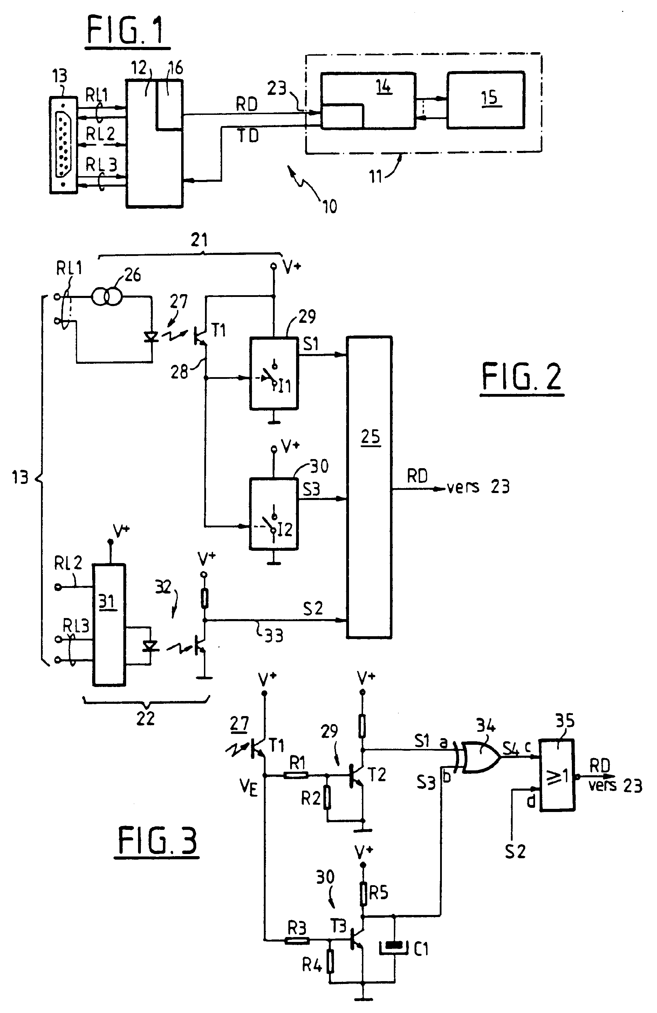

L'appareil électrique 10 représenté sur la figure 1 comprend un organe d'exploitation 11 susceptible d'être relié au moyen d'un circuit d'interface 12 et d'un connecteur 13 à une liaison à boucle de courant ou à une liaison série. L'organe d'exploitation 11 présente un microcontrôleur 14 et un organe de visualisation ou de traitement 15 des données transmises via la liaison.

Le microcontrôleur 14 est relié au circuit d'interface 12 par une ligne d'émission TD et une ligne de réception RD. Cette dernière est raccordée à un ensemble de détection et de combinaison logique 16 qui fait partie du circuit 12. Certaines des broches du connecteur 13 sont réservées à des liaisons série du type RS 232, RS 422 ou RS 485, et d'autres broches du connecteur sont affectées à la boucle de courant ; le connecteur est raccordé à l'interface par des conducteurs spécifiques RL1 (boucle de courant), RL2 (liaison RS 232), RL3 (liaison RS 422 ou 485). L'appareil est considéré comme alimenté indépendamment du fait qu'il est connecté ou non à la liaison de données.

Comme illustré sur la figure 2, le circuit d'interface 12 comporte un premier circuit de réception 21 comprenant les conducteurs RL1 dédiés à la boucle de courant, et un deuxième circuit de réception 22 comprenant les conducteurs RL2 et RL3 dédiés aux liaisons série.

Les deux circuits de réception 21, 22 présentent chacun une sortie qui génère un signal de données respectif S1, S2, les deux sorties étant reliées à une entrée commune 23 de l'organe d'exploitation 11.

Un détecteur de déconnexion 30 est associé au premier circuit de réception 21 pour délivrer un signal logique S3 dont le niveau est fonction de l'état de connexion de l'appareil, en mode boucle de courant, c'est-à-dire du fait qu'il est connecté ou non à une liaison à boucle de courant.

Une logique 25 reçoit le signal S3 ainsi que les signaux S1, S2 pour délivrer à l'entrée commune 23 de l'organe d'exploitation 11 un signal de sortie RD identique pour l'une et l'autre liaison, quel que soit l'état de connexion de l'appareil.

Le circuit 21 de réception associable à la boucle de courant comporte (voir figure 2) un générateur de courant 26 en série avec la partie émettrice d'un optocoupleur 27 dont la partie réceptrice est reliée via un conducteur 28 à un détecteur de signal 29 et au détecteur de déconnexion 30. Chacun des détecteurs 29, 30 comprend un interrupteur I1, respectivement I2, disposé sur un conducteur entre une alimentation V+ et la terre ; chaque interrupteur I1, I2 est piloté par le signal que délivre l'optocoupleur 27.

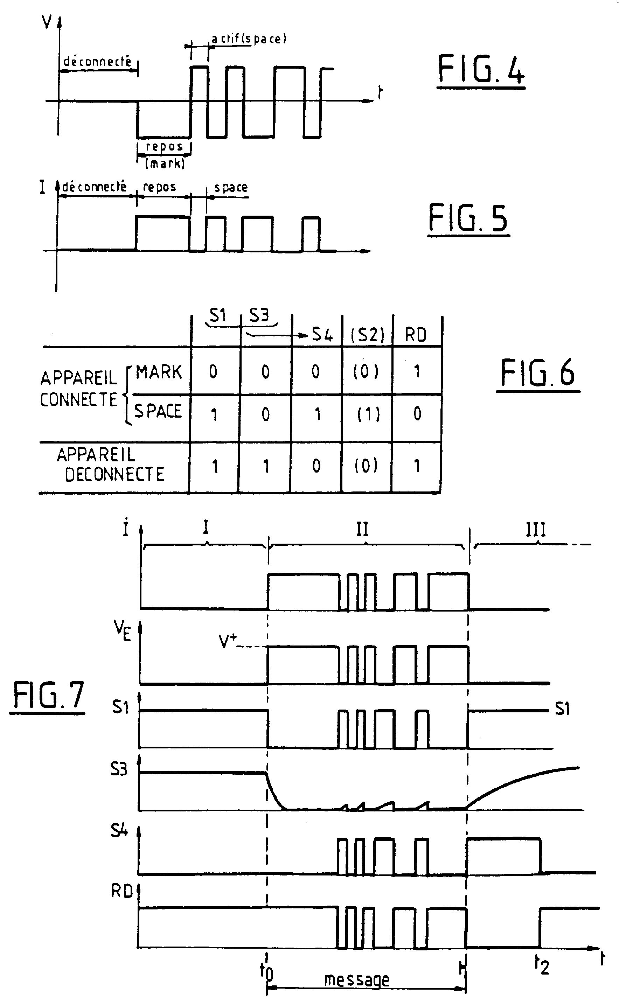

Le détecteur de signal 29 délivre le signal S1 et le détecteur de déconnexion délivre le signal S3 ; ces signaux, appliqués à la logique 25, seront commentés en regard des figures 6, 7.

Le circuit de réception 22 associable aux liaisons série comprend un interface 31 aux entrées duquel sont raccordés les conducteurs RL2, RL3 ; au moins une sortie de l'interface 31 est reliée à la partie émettrice d'un optocoupleur 32 dont la partie réceptrice est reliée via un conducteur 33 à une entrée de la logique 25 pour appliquer à celle-ci le signal S2.

On voit sur la figure 3 un exemple de réalisation de la partie "boucle de courant" du circuit de réception 21 et de la logique associée 25.

L'émetteur du phototransistor T1 de l'optocoupleur 27 est relié via une résistance R1 à la base d'un transistor T2 qui constitue l'interrupteur I1 et au collecteur duquel est recueilli le signal S1. De même, l'émetteur de T1 est relié via une résistance R3 à la base d'un transistor T3 qui constitue l'interrupteur I2 et dont l'émetteur et le collecteur sont interconnectés au moyen d'une capacité C1. Le signal S3 est recueilli au collecteur de T3 ; la capacité C1 est chargée à partir de l'alimentation V+ à travers la résistance R5.

Le signal de données S1 et le signal de déconnexion S3 sont appliqués aux entrées a, b d'une porte OU exclusif 34 ; selon la liaison qui est connectée, le signal S4 délivré par la porte 34 ou le signal de données S2 délivré par le circuit de réception 22 est appliqué aux entrées c ou d d'une porte OU inverseuse 35. Il pourrait, bien entendu, s'agir d'un simple OU câblé. La sortie de la porte 35 forme le signal RD.

Il va de soi que d'autres types d'interrupteurs que T2, T3 peuvent être choisis pour réaliser les interrupteurs I1, I2, et que la logique 25 peut comprendre d'autres combinaisons de portes pour générer le signal souhaité RD homogène, quel que soit le type de liaison embrochée sur le connecteur 13.

Il convient de rappeler que, dans le cas d'une liaison série (voir figure 4), l'état déconnecté de l'appareil se traduit par un signal d'entrée nul ; lorsque l'appareil est connecté, l'état logique 1 du signal ou "Mark" correspond à une tension négative et l'état logique 0 du signal ou "Space" correspond à une tension positive.

Dans le cas d'une boucle de courant (figure 5), l'état déconnecté de l'appareil se traduit par un courant nul. Lorsque l'appareil est connecté, l'état logique 1 du signal (Mark) correspond au passage du courant, tandis que l'état logique 0 du signal (Space) correspond à un courant nul. On est donc habituellement dans l'impossibilité de distinguer, pour une liaison à boucle de courant, l'état déconnecté de l'état connecté avec état logique 0.

Le tableau de la figure 6 montre la combinaison logique réalisée à l'aide du circuit d'interface selon l'invention. Les états logiques des signaux S1, S2, S3, S4 et RD sont indiqués respectivement lorsque la ligne est connectée et véhicule un état logique 1 (Mark), ou un état logique 0 (Space), ou lorsque la ligne est déconnectée. On constate que la logique 25 est agencée de façon que le signal RD prenne les mêmes niveaux logiques aussi bien en boucle de courant qu'en liaison série et cela pour les divers états de ligne.

Le diagramme de la figure 7 montre les valeurs prises par différents signaux. Dans une phase notée I, l'appareil est déconnecté de la ligne ; en supposant qu'il s'agit d'une boucle de courant, le courant I dans les conducteurs RL1 est nul, de sorte que T1 est bloqué et que la tension d'émetteur VE de T1 est nulle. Le signal S1 délivré par le détecteur 29 est à l'état 1, de même que le signal S3 délivré par le détecteur de déconnexion 30, puisque T3 est bloqué et la capacité C1 chargée à partir de l'alimentation V+ via la résistance R5. Le signal S4 est dès lors à l'état logique 0.

Si l'appareil est connecté à l'instant $t_0$ (phase II), l'état repos (Mark) du signal de ligne se traduit par le passage du courant I, de sorte que VE devient sensiblement égal à V+ ; T2 est alors saturé et S1 passe à l'état logique 0 ; T3 est également saturé et C1 se décharge à travers T3, si bien que S3 passe également avec un léger retard à l'état logique 0. Le signal S4 reste à l'état 0.

L'appareil restant connecté (phase II), le passage à l'état actif (Space) du signal de ligne se traduit par l'interruption du courant I, de sorte que VE devient nul, T2 se bloque et S1 passe à l'état 1. T3 se bloque aussi, de sorte que C1 se recharge à travers R5 ; le signal S3 monte, mais n'a pas le temps d'atteindre, avant la fin de l'impulsion "Space" considérée, le seuil d'actionnement de l'entrée b de la porte 34. La constante de temps R5Cl est choisie pour que le signal S3 reste significatif, c'est-à-dire inférieur audit seuil, pour un nombre prédéterminé de bits et cela dans une large gamme de vitesses de transmission, par exemple de 110 à 19 200 bauds.

Le message se compose d'une suite d'états "repos" et "actif" du signal de ligne ; une telle suite est illustrée sur la figure 7.

Lorsqu'on effectue la déconnexion à l'instant $t_1$ (phase III), le courant I redevient nul, VE également, S1 passe à l'état 1 ; S3 passe à l'état 1, mais cela avec la constante de temps R5Cl jusqu'à l'instant $t_2$ auquel il dépasse le seuil de l'entrée b de la porte OU exclusif 34.

Pendant l'intervalle $t_2$ - $t_1$, l'appareil ne peut traiter convenablement les données reçues d'une liaison série ; cet inconvénient n'est toutefois pas gênant, car le temps nécessaire pour passer réellement d'une déconnexion en boucle de courant à une reconnexion série est largement supérieur à $t_2$ - $t_1$.

## Revendications

1. Circuit d'interface pour appareil électrique connectable à une liaison série ou à une liaison à boucle de courant pour recevoir et/ou émettre un signal porteur d'informations via une telle liaison,
caractérisé par :
    - un premier circuit de réception (21) connectable à une liaison à boucle de courant,
    - un deuxième circuit de réception (22) connectable à une liaison série,
    - les deux circuits de réception étant reliés à une entrée commune (23) d'un organe (11) d'exploitation du signal,
    - un organe de détection et de traitement logique (29, 30, 25) agencé pour délivrer à l'entrée commune (23) de l'organe d'exploitation (11) un signal de sortie (RD) homogène pour l'une et l'autre liaison, quel que soit l'état de connexion de l'appareil.

2. Circuit d'interface selon la revendication 1, caractérisé en ce que l'organe de détection et de traitement logique comprend :
    - un détecteur de déconnexion (30) associé au premier circuit de réception (21) et apte à délivrer un signal logique (S3) dont le niveau est fonction de l'état connecté ou déconnecté de l'appareil, et
    - une logique (25) recevant le signal de déconnexion (S3), ainsi que des signaux de données respectifs (S1, S2) du premier circuit (21) et du deuxième circuit (22) de réception, et combinant ces signaux pour délivrer le signal de sortie (RD).

3. Circuit d'interface selon la revendication 2, caractérisé en ce que la logique (25) comprend une porte OU exclusif (34) à laquelle sont appliqués le signal de données (S1) du premier circuit et le signal de déconnexion (S3), ainsi qu'un élément OU (35) auquel sont applicables, selon la liaison, le signal de sortie (S4) de la porte OU exclusif ou le signal de données (S2) du deuxième circuit de réception (22).

4. Circuit d'interface selon la revendication 2 ou 3, caractérisé en ce que :
    - le détecteur de déconnexion (30) comprend un interrupteur (T3) et une capacité (C1) aux bornes de laquelle est prélevé le signal de déconnexion (S3),
    - l'interrupteur (T3) est piloté par un signal (VE) représentatif du courant dans une boucle reliée au premier circuit de réception (21),
    - l'interrupteur (T3) est associé à la capacité (C1) de manière que celle-ci est chargée à travers une résistance (R5) dans l'état déconnecté de l'appareil.

5. Circuit d'interface selon la revendication 4, caractérisé en ce que la constante de temps (R5, C1) est déterminée de manière qu'à l'état connecté le signal (S3) reste à son niveau représentatif de connexion dans une large gamme de vitesses de transmission.

6. Circuit d'interface selon l'une des revendications 1 à 5,
caractérisé en ce que le deuxième circuit de réception (22) comprend plusieurs conducteurs (RL2, RL3) susceptibles de connexion à des liaisons série de types différents.

## Patentansprüche

1. Schnittstellenschaltung für ein elektrisches Gerät, das an eine Serienverbindung oder eine Stromschleifenverbindung angeschlossen werden kann, um über eine solche Verbindung ein informationstragendes Signal zu empfangen und-/oder zu senden, gekennzeichnet durch
    - einen ersten Empfangskreis (21), der an eine Stromschleifenverbindung anschließbar ist,
    - einen zweiten Empfangskreis (22), der an eine Serienverbindung anschließbar ist,
    - wobei die beiden Empfangskreise an einen gemeinsamen Eingang (23) eines Organs (11) zur Auswertung des Signals angeschlossen sind,
    - ein Organ zur Erfassung und logischen Verarbeitung (29, 30, 25), das so ausgebildet ist, daß es an den gemeinsamen Eingang (23) des Auswertungsorgans (11) ein für die eine und die andere Verbindung homogenes Ausgangssignal (RD) liefert, unabhängig vom Anschlußzustand des Geräts.

2. Schnittstellenschaltung nach Anspruch 1, dadurch gekennzeichnet, daß das Organ zur Erfassung und logischen Verarbeitung aufweist:

    - einen Detektor (30) des nicht angeschlossenen Zustands, der mit dem ersten Empfangskreis (21) verbunden ist und ein logisches Signal (S3) liefert, dessen Pegel vom angeschlossenen oder nicht-angeschlossenen Zustand des Geräts abhängig ist, und

    - eine Logik (25), die das Signal (S3) des nicht angeschlossenen Zustands und Datensignale (S1, S2) des ersten (21) bzw. des zweiten Empfangskreises (22) empfängt und diese Signale kombiniert, um das Ausgangssignal (RD) zu liefern.

3. Schnittstellenschaltung nach Anspruch 2, dadurch gekennzeichnet, daß die Logik (25) ein Exklusiv-ODER-Tor (34), an das das Datensignal (S1) des ersten Kreises und das Signal (S3) des nicht angeschlossenen Zustands angelegt werden, und ein ODER-Element (35) aufweist, an das, je nach der Verbindung, das Ausgangssignal (S4) des Exklusiv-ODER Tors oder das Datensignal (S2) des zweiten Empfangskreises angelegt werden können.

4. Schnittstellenschaltung nach Anspruch 2 oder 3, dadurch gekennzeichnet, daß

    - der Detektor (30) des nicht angeschlossenen Zustands einen Schalter (T3) und einen Kondensator (C1) aufweist, an dessen Klemmen das Signal (S3) des nicht angeschlossenen Zustands abgenommen wird,

    - der Schalter (T3) von einem Signal (VE) gesteuert wird, das für den Strom in einer Schleife-repräsentativ ist, die mit dem ersten Empfangskreis (21) verbunden ist,

    - der Schalter (T3) mit dem Kondensator (C1) verbunden ist, so daß dieser im nicht angeschlossenen Zustand des Geräts über einen Widerstand (R5) geladen wird.

5. Schnittstellenschaltung nach Anspruch 4, dadurch gekennzeichnet, daß die Zeitkonstante (R5, C1) so bestimmt wird, daß im angeschlossenen Zustand das Signal (S3) auf seinem repräsentativen Anschlußpegel in einem großen Bereich von Übertragungsgeschwindigkeiten bleibt.

6. Schnittstellenschaltung nach einem der Ansprüche 1 bis 5, dadurch gekennzeichnet, daß der zweite Empfangskreis (22) mehrere Leiter (RL2, RL3) aufweist, die an Serienverbindungen verschiedener Art angeschlossen werden können.

**Claims**

1. An interfacing circuit for an electrical device connectable to a serial link or to a current loop link for receiving and/or transmitting a signal carrying data via such a link, characterized by :

    - a first receiving circuit (21) connectable to a first current loop link,

    - a second receiving circuit (22) connectable to a serial link,

    - said two receiving circuits being connected to a common input (23) of a device (11) processing said signal,

    - a detection and logic processing device (29, 30, 25) arranged to supply to said common input (23) of said processing device (11) an output signal (RD) homogeneous for both links, irrespective of the connection status of said device.

2. The interfacing circuit as claimed in claim 1, characterized in that said detection and logic processing device comprises :

    - a disconnection detector (30) associated with said first receiving circuit (21) and capable of supplying a logic signal (S3) of which the level is a function of the connected or disconnected status of said device, and

    - a logic (25) receiving the disconnection signal (S3), as well as respective data signals (S1, S2) from said first (21) and said second (22) receiving circuits, and combining said signals for supplying said output signal (RD).

3. The interfacing circuit as claimed in claim 2, characterized in that said logic (25) comprises an XOR gate (34) to which are applied said data signal (S1) from said first circuit and said disconnection signal (S3), as well as an OR element (35) to which can be applied, depending on the link, the output signal (S4) of said XOR gate or said data signal (S2) of the second receiving circuit (22).

4. The interfacing circuit as claimed in either claim 2 or 3, characterized in that :

    - said disconnection detector (30) comprises a switch (T3) and a capacitor (C1) at the terminals of which said disconnection signal (S3) is sampled,

    - said switch (T3) is controlled by a signal (VE) representative of the current in a loop connected to said first receiving circuit (21),

    - said switch (T3) is associated with said capacitor (C1) so that the latter is charged via a resistor (R5) in the disconnected status of said device.

5. The interfacing circuit as claimed in claim 4, characterized in that the time constant (R5, C1) is determined so that, in the connected status, said signal (S3) remains at its representative level of connection for a wide range of transmission speeds.

6. The interfacing circuit as claimed in any one of claims 1 to 5, characterized in that said second receiving circuit (22) comprises plural conductors (RL2, RL3) capable of being connected to different types of serial links.

# FIG.1

# FIG.2

# FIG.3

FIG.4

actif(space)

déconnecté

repos
(mark)

FIG.5

I déconnecté repos space

| | S1 | S3 | S4 | (S2) | RD |
|---|---|---|---|---|---|
| APPAREIL CONNECTE MARK | 0 | 0 | 0 | (0) | 1 |
| APPAREIL CONNECTE SPACE | 1 | 0 | 1 | (1) | 0 |
| APPAREIL DECONNECTE | 1 | 1 | 0 | (0) | 1 |

FIG.6

i    I    II    III

$V_E$

$V^+$

FIG.7

S1    S1

S3

S4

RD

$t_0$    message    $t_1$    $t_2$    t